# EUROPEAN PATENT SPECIFICATION

(11) **EP 3 900 166 B1**
(45) Date of publication and mention of the grant of the patent: **09.12.2026**
(21) Application number: 19829171.8
(22) Date of filing: 19.12.2019
(51) Int. Cl.: H02K 15/36, H02K 15/35

(54) **DEVICE AND METHOD FOR WIDENING AND TWISTING**
VORRICHTUNG UND VERFAHREN ZUM AUFWEITEN UND DREHEN
DISPOSITIF ET PROCÉDÉ D'ÉLARGISSEMENT ET DE TORSION

(30) Priority: 21.12.2018 EP 18215154
(43) Date of publication of application: 27.10.2021
(73) Proprietor: ATOP S.p.A., 50028 Barberino Tavarnelle (IT)
(72) Inventor: PONZIO, Massimo, 50028 Tavarnelle val di Pesa (IT); CORBINELLI, Rubino, 53036 Staggia Senese (IT)
(74) Representative: Hepp Wenger Ryffel AG
(86) International application number: PCT/EP2019/086288
(87) International publication number: WO 2020/127718

(56) References cited:
- WO-A1-2012/093413
- JP-A- 2005 224 028
- JP-A- 2015 035 922
- JP-A- 2015 171 260
- US-A1- 2018 183 307
- US-A1- 2018 212 496

## Description

The present invention relates to a device and a method for widening ends of legs of hairpin conductors arranged in slots of a stator core, and to a device and a method for twisting ends of legs of hairpin conductors arranged in slots of a stator core.

Generally the present invention relates to apparatuses and processes for aligning wire conductors members inserted in slots of a core of a dynamo electric machine.

It is known in the art to use apparatuses and processes adapted for the manufacturing of stator coils for dynamo electric machine.

In a typical manufacturing scenario coil members are inserted in slots of a core of an electric dynamo machine. Pairs of wire conductors extending from the coil members are welded together, wherein each conductor belongs to a coil member. Coil members of this type can be those having a fork like shape, normally referred to as "U shaped coil members" or "hairpins" in the art. A hairpin conductor may be typically provided with two legs and a connection portion between said legs. Alternatively the conductor may only have one leg or more than two legs.

One part of the hairpin conductor, for example the connection portion, extend axially outward of the stator on one axial side of the stator core whereas the legs extend out of the slots on the opposite axial side of the stator core. By mutually connecting two of the extending legs, a continuous conductor similar to a winding can be created.

Stators wound with hairpin coil members are typically used for electric drives or hybrid drives of automotive vehicles.

The hairpin conductors may be preshaped and/or may be preassembled into a partial or a full nest outside the stator core.

After insertion of the nest into the core, the ends of the hairpin conductors have to be arranged, such that pairs to be connected are close to each other. In a further step the legs may be pressed together and may be connected by welding.

The arrangement of hairpin conductors usually is achieved by a twisting device. A twisting device usually comprises at least a first and a second ring coaxial with each other and extended around a twisting axis. The rings comprise respectively a first and a second circular array of pockets. The rings are relatively rotatable with respect to each other around the twisting axis in order to assume at least a first and a second configuration in which respective pockets of the first and second array are radially aligned with each other in pairs with respect to the twisting axis.

When the twisting device is in the first configuration ends of legs of hairpin conductors protruding from the stator may be inserted in the pockets. After rotating the rings to the second configuration the two legs having been radially aligned in the first configuration are radially offset from each other by a predefined pitch in the second configuration.

A fundamental requirement of the connection operation is the accurate and repeatable positioning of the ends of conductors with respect to each other and to the twisting device. For the subsequent welding process the ends have to be positioned closely together.

An increased hourly production of these stators requires a reduction in the time available for performing the arranging and welding operation. This leaves less time for carrying out the positioning of the ends of the pairs of conductors.

US 2018/183307 A1 discloses an electrical conductor aligning device for aligning a plurality of electrical conductors in an annular shape. The aligning device comprises holding sections. The holding section includes a holding main section and a first and a second hook serving as lateral parts provided to a leading end side of the holding section main body. The holding section further includes a rotating part and flat part at a central part of a leading end face of the holding section main body, as a chuck mechanism.

JP 2015 171260 A discloses a welding apparatus and a technique for positioning edge parts of conduction segments in rows, line or columns. A positioning device comprises two positioning members having a comb like structure forming sections for receiving pairs of legs. Each positioning members may be displaced relative to another positioning member in a plane perpendicular to the axis.

JP 2015 35922 A concerns a coil joining method for a rotating electrical machine. Constraining members are shown having a comb like structure, which may be moved towards each other such that the teeth of a first constraining member and the teeth a second constraining member approach each other and press pairs of coil lead ends together. Coil lead ends may be temporarily fixed to the constraining members in a state where the axial direction and the circumferential direction are positioned.

JP 2005 224028 A concerns a segment coil joining apparatus with a work-holding/moving means. The document discloses a clamping mechanism comprising two clamp plates with a comb like structure.

WO2012/093413 A1 discloses a fixture for twisting end portions of bar conductors. The device comprises inner and outer rings with open pockets forming joint closed pockets for receiving a pair of ends of legs.

US2018/0212496 A1 discloses a tool arrangement with skewing tools for relatively positioning conductor ends. A first skewing tool comprises receiving regions or pockets, which may be formed as a blind hole of a body. A further selective skewing tool has pockets with a sloping pocket wall in axial direction.

It is an object of the present invention to avoid the drawbacks of the state of the art and in particular to provide devices and methods for quick and precisely arranging ends of hairpin conductors in preparation of a welding step.

According to the present invention, these and other objects are solved with the devices and methods according to the independent patent claims.

According to a first aspect of the invention a device according to the invention is suitable for widening ends of legs of hairpin conductors arranged in slots of a stator core.

Typically hairpin conductors are inserted in slots of a stator core and the ends of the legs of hairpin conductors axially protrude from the stator core. The slots are arranged circumferentially such that pairs of legs of conductors are aligned radially.

To allow inserting the end of the legs into pockets of a twisting device the ends have to be distanced from each other. This step is called widening. Preferably pairs of end of legs, belonging to a specific layer of the stator have to be distanced with respect to a pair of ends of legs of a neighbouring layer. A layer comprises and first group of ends of legs having a first distance to the stator axis and a second group of ends having a second distance to the stator axis, wherein two of the extending legs, one belonging to the first group and one belonging to the second group, are to be mutually connected.

The device according to the invention comprises at least one finger for radially moving the ends of legs of hairpin conductors. Preferably the device comprises a plurality of fingers, such that a plurality of ends of legs may be moved independently and/or simultaneously.

Said at least one finger is arranged moveably in a radial inward and in a radial outward direction. Said at least one finger is arranged moveably in an axial upward and in an axial downward direction.

Said at least one finger comprises at least one radially extending arm and a separation member.

Preferably said arm is designed to be positioned between two circumferentially adjacent legs of hairpin conductors.

The separation member is arranged adjacent to a, preferably radially inner, end of the arm.

The separation member may be connected to the arm. The arm and the separation member may be integrally formed.

The separation member may be arranged such that the arm and the separation member include an angle of 90°. The separation member preferably has a circumferential extension. The circumferential dimension of the separation member preferably corresponds to the circumferential dimension of a leg of a hairpin conductor, which is arranged in the stator.

The separation member preferably has an axial extension, which corresponds to the lengths of the ends of the legs, that are to be made available for connecting.

Said separation member is designed for being positioned between two ends of radially neighbouring legs of pairs of hairpin conductors.

The separation member may comprise a tapered axial end, which allows introducing the separation member between the ends of the legs from an axial direction.

Said finger has a first, preferably radially inner, section adjacent to the separation member.

Preferably the first section is part of a space which is encompassed by the separation member and the arm.

Said first section has a first radial width dimensioned to receive at least one pair of legs and is adapted for moving said pair of legs when the finger is radially moved.

Preferably the first section is dimensioned to receive a pair of end of legs and is adapted for moving the ends.

Preferably the first radial width is dimensioned for receiving exactly one pair of legs.

The radial extension of a leg of a conductor is in a range of 2mm to 5mm. The circumferential extension of a leg of a conductor is also in a range of 2mm to 5mm.

Accordingly the first section has radial width in a range of 4.5mm to 10.5mm.

The finger has a second, preferably radially outer, section, which does not overlap with the first section.

Preferably the second section also is part of a space which is encompassed by the separation member and the arm.

Preferably a separation web is arranged between the first and the second section. The second section may be part of a space which is encompassed by said web and the arm.

Said second section has a second radial width, wherein said first radial width is smaller than the second radial width.

Preferably the second section has radial width in a range of 11mm to 23mm.

The arm has a radial length which is greater than the sum of the radial with of the first section and the radial width of the second section.

Hence the second section is dimensioned to at least receive one pair of ends.

Furthermore said second section is dimensioned to receive at least one pair of legs and the finger may be radially moved without moving the pair of legs hosted in the second section.

A first pair of ends of legs, positioned radially outward from a second and a third pair of legs, may be received by the first section when the finger has been brought to the respective radial position and been moved axially such that the separation element is positioned between a first and second pair of ends of legs. Then, the finger may be moved radially outward, such that the first and the second pair of ends of legs become more distanced.

The finger may then perform an axial movement to release the first pair of legs from the first section. Now the separation member may be positioned between the second and the third pair of ends of legs, such that the second pair of ends is received in the first section and the first pair of ends is received in the second section. The second section has a sufficient radial widths, such that the first pair remains at its radial position when the finger is radially moved to distance the second and the third pair. The arm may serve as a guiding face, such that the circumferential position of the ends of legs is also maintained.

Preferably the radial width of the second section is large enough to host at least two pairs of end of legs being distanced from each other.

The at least one finger is adapted to radially move the ends of a pair of legs over a radial moving distance.

Preferably at least a radially outermost pair of legs is moved in a radial outward direction.

Preferably a radial length of the arm is larger than the sum of said radial moving distance and at least twice of the radial extension of the ends of legs.

The radial extension of a pair of ends of legs corresponds to twice of the radial extension of the ends of legs, because the ends of a pair of legs are arranged close to each other.

In a preferable embodiment of the device, said at least one finger has a seat for axially receiving the ends of legs of hairpin conductors.

Said seat comprises a first, preferably radially inner, compartment providing the first section and having a first radial compartment width dimensioned to receive at least one pair of ends of legs.

The first radial compartment width corresponds the radial width of the first section.

Said seat further comprises a second, preferably radially outer, compartment providing the second section and having a second radial compartment width. The second radial compartment width corresponds to the radial width of the second section.

Hence, said first radial compartment width is smaller than the second radial compartment width.

Preferably the seat and the compartments are firmly attached to the finger and may be integrally formed.

The separation member may be formed by one of the walls, preferably a wall being arranged at a radially inner end, radially bounding the first compartment.

A wall between the first and the second compartment may form a separation web between the first and the second section.

The compartments at least are open in one axial direction which points to the ends of the legs. The lateral sidewalls of the compartments may provide lateral guiding faces which prevent a circumferential movement of the ends of legs, as well during movement of the legs as during movement of neighbouring end of legs.

The compartments may comprise a bottom plate or may be open in the axial direction which points away from the ends of the legs.

When the finger is axially moved in the direction of the legs, at least one pair of legs may be received by the first compartment, while at least one other pair of legs may be received by the second compartment.

When the finger is radially moved, the pair of ends of legs received in the first compartment is moved together with the compartment, while the at least other pair of legs hosted by the second compartments is not moved.

The first compartment may be dimensioned to receive exactly one pair of ends.

The pair of ends of legs may belong to a layer of a stator winding, in which connections are to be established in a further step.

The second compartment is dimensioned to receive at least two pairs of ends. Hence, the device may be used to separate at least three pairs of legs. When a last pair of legs remains unmoved by the device, up to four pairs of legs, being radially aligned in a row, may be separated from each other.

Each plurality of circumferentially arranged pairs having the same distance from the stator axis forms a layer. Hence, conductors may be prepared for welding for a stator winding with up to four layers.

The finger may be rotatable around the stator axis in a circumferential direction and separate one radially aligned row of ends of legs after another.

In preferred embodiment the machine comprises a plurality of circularly arranged fingers and the fingers are independently moveably. The fingers may be moved simultaneously, such that a plurality of radially aligned ends of legs may be widened at the same step. Preferably there is a finger for all radially aligned rows of ends of legs.

A method according to the invention is suitable for widening ends of legs of hairpin conductors arranged in slots of a stator core.

The method preferably uses a device as described above and comprises the following step.

A separation member being connected to a, preferably radially inner, end of a radially extending arm is positioning between two ends of radially neighbouring pairs of legs of hairpin conductors. The separation member preferably is positioned by axially moving the arm and the separation member.

At least one first pair of legs of hairpin conductors is radially moved by radially moving said separation member.

Said at least one first pair of legs is disengaged from said separation member. Preferably the pair of legs is disengaged by axially moving the arm and the separation member.

The separation member is radially moved to a radial position corresponding to the radial position of at least one second pair of legs, whilst at least one first pair of legs is kept stationary.

The separation member is positioned adjacent to the second pairs of legs, preferably on the radially inner side, preferably by an axial movement.

Preferably said second pair of legs is radially moved by radially moving said separation member, whilst the at least one first pair of legs is kept stationary.

In a favourable embodiment, further pairs of ends may be radially moved one after another, while pairs already have been moved are kept stationary.

In a preferential embodiment a plurality of pairs arranged circumferentially around a stator axis are radially moved in the same operation step by a plurality of separation members.

In preferred embodiment of the method, at least one first pair of legs is inserted in a first, preferably radially inner, compartment of a seat of a finger, said first radial compartment having a first radial compartment width.

A circumferentially extending wall of the first compartment serves as a separation member. The wall is preferably a radially inner wall.

The at least one first pair of ends of legs is radially moved by moving said finger radially.

Preferably the first pair of ends of legs is moved in a radial outward direction to be distanced from a second pair of ends.

The at least one first pair of ends of legs is disengaged from said first compartment, preferable by axial movement of the finger.

The finger is then radially moved to a radial position corresponding to the radial position of at least one second pair of ends of legs, radially adjacent to the first pair of ends.

Said at least one second pair of ends of legs is inserted into the first compartment and the at least one first pair of legs is inserted in a, preferably radial outer, second compartment having a second radial width larger than the first radial compartment width. The first pair of ends maintains its position.

Said second pair of ends of legs is radially moved by moving said finger radially, whilst the at least one first pair of ends of legs is kept stationary.

Preferably the second pair of ends of legs is moved in a radial outward direction while the first pair of ends is not moved. The first pair and second pair come closer to each other, but they have a greater distance than before radially moving the first pair of ends.

Each step of radial movement provides an exact positioning of a pair of ends of legs, which is maintained during further movement steps for positioning further pairs.

After the widening process pairs of ends of legs are separated and thus they are prepared to be inserted in pockets of a twisting device.

A second aspect of the invention concerns a device for twisting ends of legs of hairpin conductors arranged in slots of a stator core.

Preferably pairs of ends of legs of hairpin conductors have been separated by a device and/or method for widening ends as described above.

The device for twisting comprises at least one pair of adjacent rings having a radially outer ring and a radially inner ring.

The inner and outer ring are direct neighbours, no intermediate ring is arranged between the inner and outer ring.

At least one of said inner and said outer ring is moveable in a circumferential direction relative to the other ring. Preferably said inner ring and said outer ring are moveable in circumferential opposite directions.

The device may comprise further pairs of rings. Each pair of ring is for positioning a layer of conductors of a stator winding.

Each of said inner ring and outer ring comprises open pockets for receiving the end of a leg of a hairpin conductor. Each open pocket is dimensioned for receiving exactly one end of leg.

The open pockets in said radially outer ring have a radial outer wall and a radially inner open end.

The open pockets in said radially inner ring have a radial inner wall and a radially outer, open end.

The open pockets may have lateral walls and may also have a bottom plate. Between lateral walls of circumferentially adjacent open pockets there is a radial guiding face.

Each open pocket of the inner ring forms a joint closed pocket for receiving a pair of end of legs with a respective open pocket of the outer ring when the inner and the outer ring are circumferentially aligned. The radial guiding faces of the inner and the outer ring are also radially aligned and may contact each other in this position.

The joint closed pockets each have the radial outer wall of an open pocket of the outer ring and the radial inner wall of an open pocket of the inner ring. The joint closed pockets may have lateral walls formed by lateral walls of the open pockets.

The joint closed pocket is dimensioned for receiving exactly one pair of ends of legs, which are arranged close to each other.

Since the joint closed pocket for receiving a pair of end of legs is formed by two open pockets, there is no separation wall between the pocket for hosting one end of the pair of ends and the pocket for hosting the other end of the pair of ends.

By moving at least one of the rings in a circumferential direction, the ends of the legs are bent such that each hairpin conductor has an additional pitch.

During twisting the radial position of the ends of legs housed in the open pockets may be maintained by the walls of the open pockets and by the guiding faces of the opposite ring.

Ends of legs of conductors of a respective layer can be brought together close to each other not just immediately before welding, but already before twisting. Since the ends of legs have to be widened before insertion into the twisting device anyway, an additional step of bringing together the ends of a layer after twisting is not necessary.

At least one of the rings may be circumferentially moveable, such that open pockets of the inner ring and the open pockets of the outer ring form first joint closed pockets in a starting position and form second joint closed pockets in an end position.

Thus, in starting position pairs of ends of legs may be inserted into the joint closed pockets. After twisting, that is circumferentially moving at least one of the rings, new pairs of ends of legs are combined in second joint closed pockets.

The degree of rotating the rings defines the pitch of the conductors. For example, the number of open pockets between the end of a first leg and the end of the other leg of the same hairpin conductor plus one corresponds to the pitch of the conductor.

A method according to the invention is suitable for twisting the ends of legs of hairpin conductors in a stator core and uses a device for twisting as described above.

The method comprises the following steps.

At least a pair of ends of legs of hairpin conductors is inserted in a joint closed pocket formed by an open pocket of the inner ring and an open pocket of the outer ring.

At least one of the inner ring and the outer ring is circumferentially turned, while one end of the pair of ends of the legs remains in the open pocket of the inner ring and one of the ends of the pair remains in the open pocket of the outer ring. The ends of the originally inserted pair are distanced from each other and tee ends are bent by this process step.

Preferably a plurality of pairs of ends of legs circumferentially arranged with respect to the axis of a stator is inserted in corresponding plurality of join closed pockets, formed by an open pocket of in inner ring and an open pocket of an outer ring. There may be more than one pair of inner and outer rings.

In a preferable embodiment of the method, each pair of a plurality of pairs of ends of legs of hairpin conductors is inserted into a joint closed pocket, and after circumferentially turning new pairs of ends of legs are arranged in joint closed pockets. Preferably all ends of legs are part of a new pair.

Additional ends of special conductors may also be inserted in a joint pocket. Not all ends need to be part of a pair. Also after twisting, there may be joint closed pockets, which host only one end of a leg of a conductor.

Thus, the ends of legs are prepared to be welded and to form a winding.

The invention will be explained hereinafter with reference to the description of specific embodiments and the respective drawings, which show:
- Figure 1: a perspective view of a device for widening ends of legs of hairpin conductors;
- Figure 2: a perspective view of detail of a device for widening ends of legs of hairpin conductors;
- Figure 3: a further perspective view of detail of a finger of a device for widening ends of legs of hairpin conductors;
- Figures 4a-4c: a schematic illustration of method steps for widening ends of legs of hairpin conductors;
- Figure 5: a perspective view of a device for twisting ends of legs of hairpin conductors;
- Figure 6: a perspective view of a detail of a device for twisting ends of legs of hairpin conductors;
- Figure 7: a perspective view of a further detail of a device for twisting ends of legs of hairpin conductors.

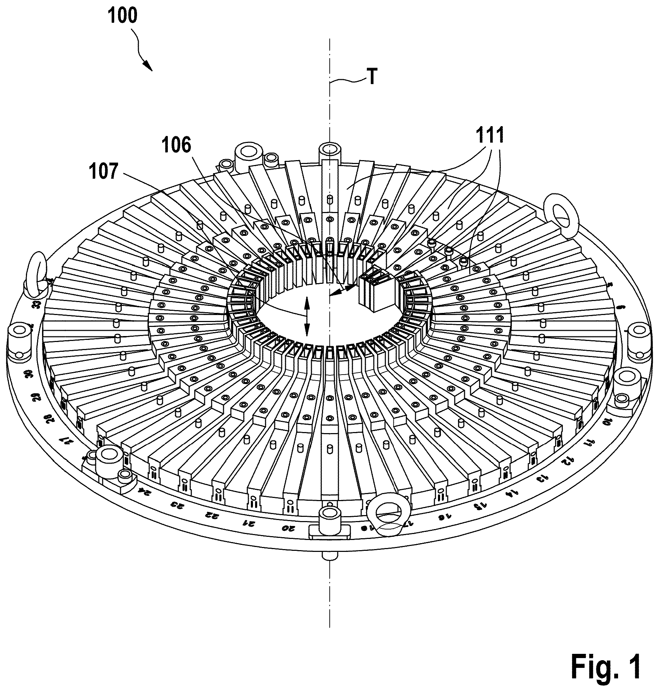

Figure 1 shows a perspective view of a device 100 for widening ends of legs of hairpin conductors.

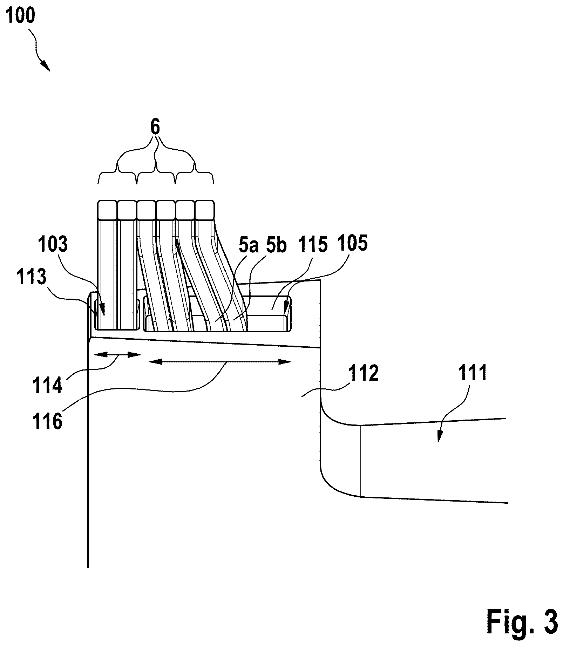

The device comprises a plurality of fingers 111, for radially moving the ends 5a, 5b of legs of hairpin conductors (see figure 3).

The fingers 111 are circumferentially arranged with respect to a system axis T corresponding to the axis of a stator (not shown in the figures).

The fingers 111 are arranged moveably in a radial direction 106 and they are arranged moveable in an axial direction 107.

The fingers 111 are independently moveably.

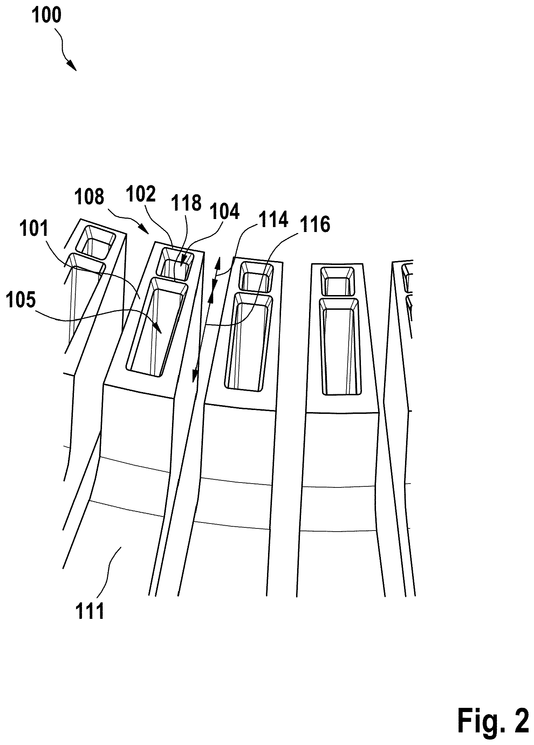

Figure 2 shows a perspective view of detail of a device 100 for widening ends 5a, 5b of legs of hairpin conductors (see figure 3).

Each finger 111 comprises at least one radially extending arm 101 and a separation member 102 being arranged adjacent to a radially inner end 108 of the arm 101.

The separation member 102 is designed for being positioned between two ends 5a, 5b (see figure 3) of radially neighbouring legs of pairs of hairpin conductors.

Each finger 111 has a first, radially inner, section 104 adjacent to the separation member 102. The first section 104 has a first radial width 114 dimensioned to receive at least one pair of legs 5a, 5b (see figure 3) and is adapted for moving said pair of legs 5a, 5b (see figure 3) when the finger 111 is radially moved.

Each finger 111 has a second, radially outer, section 105, which does not overlap with the first section 104. Said second section 105 has a second radial width 116.

The first radial width 114 is smaller than the second radial width 116. The second section 105 is dimensioned to receive at least one pair of legs 5a, 5b (see figure 3) without moving, when the finger 111 is radially moved.

A separation web 118 is arranged between the first section 104 and the second section 105.

Figure 3 shows a perspective view of detail of a finger 111 of a device 100 for widening ends 5a, 5b of legs of hairpin conductors.

Each finger 111 has a seat 112 for axially receiving the ends 5a, 5b of legs of hairpin conductors. The seat 112 comprises a first, radially inner, compartment 113 providing the first section 103 and having a first radial compartment width 114 dimensioned to receive one pair 6 of legs, and a second, radially outer, compartment 115 providing the second section 105 and having a second radial compartment width 116. The first radial compartment width 114 is smaller than the second radial compartment width 116.

The second compartment 115 is dimensioned to receive at least two pairs 6 of ends 5a, 5b.

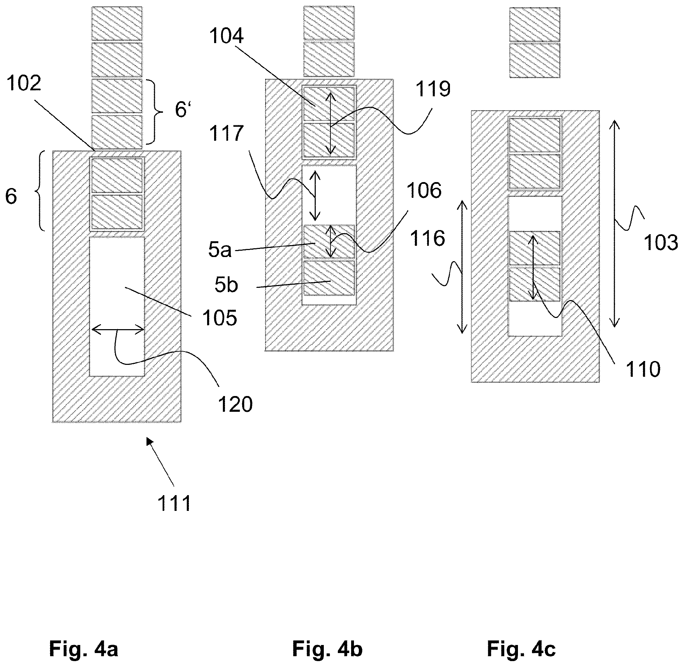

Figures 4a-4c show a schematic illustration of method steps for widening ends of legs of hairpin conductors.

The fingers 111 are adapted to radially move the, preferably at least radially outermost, ends 5a, 5b of the pair 6 of ends of legs over a radial moving distance 117.

The second radial width 116 is larger than the sum of said radial moving distance 117 and at least twice of the radial extension 110 of the pairs of ends of legs.

The second radial width 116 preferably is in a range of 11mm to 23mm.

The radial width 119 of the first section 104 preferably is in a range of 4.5mm to 10.5mm.

The circumferential width 120 of the first section 104 and the second section 105 preferably is in a range of 2.5mm to 5.5mm.

A radial length 103 of the arm 101 is larger than the sum of said radial moving distance 117 and at least twice of the radial extension 110 of the pairs of ends of legs.

In a first step a separation member 102 is positioned between two ends of radially neighbouring pairs 6, 6'of legs of hairpin conductors (see figure 4a).

The first pair 6 of legs of hairpin conductors is radially moved by radially moving the separation member 102. The first pair 6 of ends of legs is disengaged from said separation member 102. The separation member 102 is then radially moved to a radial position corresponding to the radial position of at least one second pair 6' of legs, whilst keeping the at least one first pair 6 of legs stationary (see figure 4b).

The second pair 6' of legs is radially moved by radially moving said separation member 102, whilst keeping the first pair 6 of legs stationary.

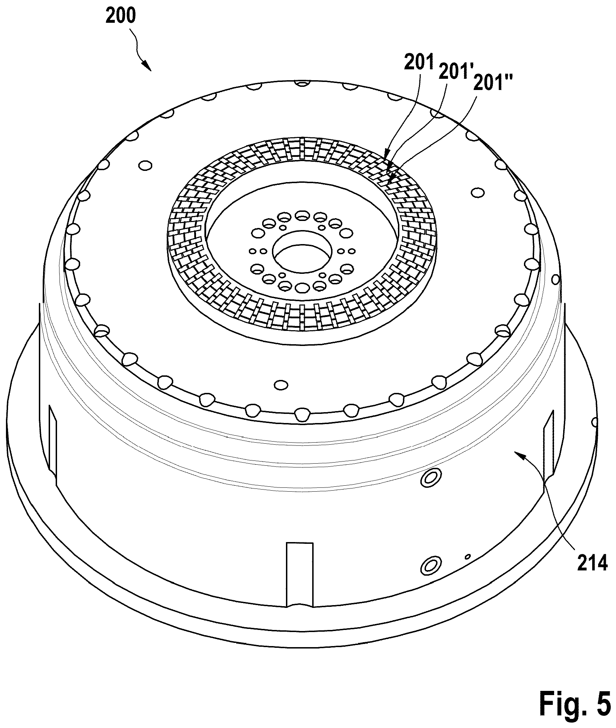

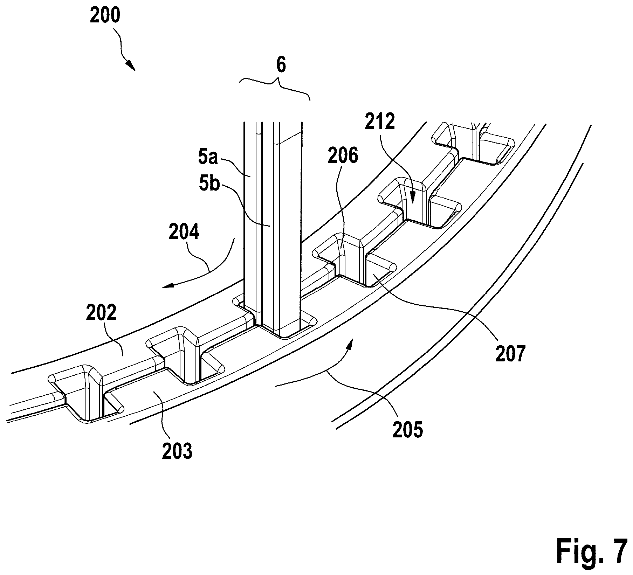

Figure 5 shows a perspective view of a device 200 for twisting ends 5a, 5b of legs of hairpin conductors (see figure 7).

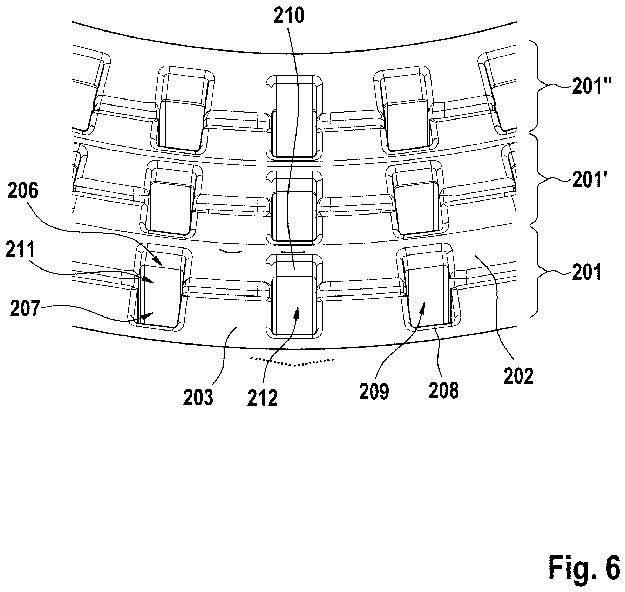

The device 200 comprises a plurality of pairs 201, 201', 201" of adjacent rings 202, 203 (see figure 6). The device 200 comprises an actuation apparatus 214 for independently moving the rings 202, 203 in circumferential directions 204, 205.

Figure 6 shows a perspective view of a detail of a device for twisting ends 5a, 5b of legs of hairpin conductors (see figure 7).

Each pair 201, 201', 201" of adjacent rings comprises a radially outer ring 203 and a radially inner ring 202.

Each of said inner ring 202 and outer ring 203 comprise open pockets 206, 207 for receiving the end 5a, 5b of leg of a hairpin conductor (see figure 7).

The open pockets 207 in said radially outer ring 203 have a radial outer wall 208 and a radially inner, open end 209.

The open pockets 206 in said radially inner ring 202 have a radial inner wall 210 and a radially outer, open end 211.

Each open pocket 206 of the inner ring 202 forms a joint closed pocket 212 with a respective open pocket 207 of the outer ring 203 when the inner ring 202 and the outer ring 203 are circumferentially aligned. The joint closed pockets 212 each have the radial outer wall 208 of an open pocket 207 of the outer ring 203 and the radial inner wall 210 of an open pocket 206 of the inner ring 202.

Figure 7 shows a perspective view of a further detail of a device for twisting ends of legs of hairpin conductors.

At least one of said inner ring 202 and said outer ring 203 is moveable in a circumferential direction 204 relative to the other ring 202, 203. Preferably said inner ring 203 and said outer ring 202 are moveable in circumferential opposite directions 204, 205.

Each open pocket 206 of the inner ring 202 forms a joint closed pocket 212 for receiving a pair of end 6 of legs 5a, 5b with a respective open pocket 207 of the outer ring 203 when the inner ring 202 and the outer ring 203 are circumferentially aligned.

The rings 202, 203 are circumferentially moveable, such that open pockets 206 of the inner ring 202 and open pockets 207 of the outer ring 203 form first joint closed pockets 212 in a starting position and form second joint closed pockets in an end position. New pairs of ends of legs are formed, which are housed in the second joint closed pockets.

## Claims

1. A device (100) for widening ends (5a, 5b) of legs of hairpin conductors arranged in slots of a stator core, said device comprising at least one finger (111), preferably a plurality of fingers (111), for radially moving the ends of legs of hairpin conductors, wherein
- said at least one finger (111) is arranged moveably in a radial inward and in a radial outward direction,
- said at least one finger (111) is arranged moveably in an axial upward and in an axial downward direction;
- said at least one finger (111) comprises at least one radially extending arm (101) and a separation member (102) being arranged adjacent to an, preferably radially inner, end of the arm (101);
- said separation member (102) is designed for being positioned between two ends (5a, 5b) of radially neighbouring legs of pairs (6, 6') of hairpin conductors;
- said finger (111) has a first, preferably radially inner, section (104) adjacent to the separation member (102),
- said first section (104) having a first radial width (114) dimensioned to receive at least one pair (6) of ends of legs and is adapted for moving said pair (6) of end of legs when the finger (111) is radially moved;
- and said finger (111) has a second, preferably radially outer, section (105), which does not overlap with the first section (104),
- **characterized by** said second section (105) having a second radial width (116);
- wherein said first radial width (114) is smaller than the second radial width (116), and wherein said second section (105) is dimensioned to receive at least one pair (6) of legs without moving, when the finger (111) is radially moved, wherein a separation web (118) is arranged between the first and the second section (112, 115), wherein said at least one finger (111) has a seat (112) for axially receiving the ends of legs of hairpin conductors, said seat (112) comprises a first compartment (113) providing the first section and having a first radial compartment width (114) dimensioned to receive at least one pair (6) of legs, and a second compartment (115) providing the second section and having a second radial compartment width (116), wherein said first radial compartment width (114) is smaller than the second radial compartment width (116).

2. The device according to claim 1, wherein the at least one finger (111) is adapted to radially move the, preferably at least radially outermost, ends of the pair (6) of legs over a radial moving distance (117) and wherein a radial length (103) of the arm (101) is larger than the sum of said radial moving distance (117) and at least twice of the radial extension (110) of the pairs (6, 6') of ends of legs.

3. The device according to one of the preceding claims, wherein the first compartment (113) is a radially inner compartment (113), and the second compartment (115) is a radially outer compartment (115).

4. The device according to claim 3, wherein the first compartment (115) is dimensioned to receive exactly one pair (6) of ends.

5. The device according to one of the preceding claims 3 or 4 wherein the second compartment (115) is dimensioned to receive at least two pairs (6, 6') of ends.

6. The device according to one of the preceding claims wherein the machine comprises a plurality of circularly arranged fingers (111) and wherein the fingers (111) are independently moveably.

7. A method for widening ends (5a, 5b) of legs of hairpin conductors arranged in slots of a stator core, said method comprising the steps of
- Positioning a separation member (102) being connected to a, preferably radially inner, end of a radially extending arm (101) between two ends of radially neighbouring pairs (6, 6') of legs of hairpin conductors;
- Radially moving at least one first pair (6) of legs of hairpin conductors by radially moving said separation member (102);
- Disengaging said at least one first pair (6) of ends of legs from said separation member (102),
- Radially moving the separation member (102) to a radial position corresponding to the radial position of at least one second pair (6') of legs, whilst keeping the at least one first pair(6) of legs stationary,
- and preferably radially moving said second pair (6') of legs by radially moving said separation member (102), whilst keeping the at least one first pair (6) of legs stationary, the method being **characterized in that** the method comprises the further steps of
- Inserting at least one first pair (6) of ends of legs, in a first, preferably radially inner, compartment (113) of a seat (112) of a finger (111), said first radial compartment (113) having a first radial compartment width (114);
- Moving said at least one first pair (6) of legs radially by moving said finger (111) radially;
- Disengaging said at least one first pair (6) of ends of legs from said first compartment (113);
- Radially moving the finger (111) to a radial position corresponding to the radial position of at least one second pair (6') of ends of legs,
- Inserting said at least one second pair (6') of ends of legs into the first compartment (113) and inserting the at least one first pair (6) of ends of legs in **a,** preferably radial outer, second compartment (115) having a second radial compartment width (116) larger than the first radial width (114),
- Moving said second pair (6') of ends of legs radially by moving said finger (111) radially, whilst keeping the at least one first pair (6) of ends of legs stationary.

8. System for preparing ends of legs of hairpin conductors in a stator core for welding, comprising a device for widening according to one of claims 1-6 and a device of twisting.

9. Method for preparing ends of legs of hairpin conductors in a stator core for welding comprising steps of a method according to claim 7 and steps of a method of twisting.

## Patentansprüche

1. Eine Vorrichtung (100) zum Aufweiten von Enden (5a, 5b) von Schenkeln von Haarnadelleitern, die in Nuten eines Statorkerns angeordnet sind, wobei die Vorrichtung mindestens einen Finger (111), vorzugsweise eine Vielzahl von Fingern (111), zum radialen Bewegen der Enden von Schenkeln von Haarnadelleitern umfasst, wobei
der mindestens eine Finger (111) in einer radialen Richtung nach innen und in einer radialen Richtung nach aussen beweglich angeordnet ist,
der mindestens eine Finger (111) in einer axialen Richtung nach oben und in einer axialen Richtung nach unten beweglich angeordnet ist;
der mindestens eine Finger (111) mindestens einen sich radial erstreckenden Arm (101) und ein Trennelement (102) umfasst, das benachbart zu einem, vorzugsweise radial inneren, Ende des Arms (101) angeordnet ist;
das Trennelement (102) dafür ausgelegt ist, zwischen zwei Enden (5a, 5b) von radial benachbarten Schenkeln von Paaren (6, 6') von Haarnadelleitern positioniert zu werden;
der Finger (111) einen ersten, vorzugsweise radial inneren, Abschnitt (104) benachbart zum Trennelement (102) aufweist, wobei der erste Abschnitt (104) eine erste radiale Breite (114) aufweist, die dimensioniert ist, um mindestens ein Paar (6) von Schenkelenden aufzunehmen, und ausgelegt ist, um das Paar (6) von Schenkelenden zu bewegen, wenn der Finger (111) radial bewegt wird;
und der Finger (111) einen zweiten, vorzugsweise radial äusseren, Abschnitt (105) aufweist, der den ersten Abschnitt (104) nicht überlappt,
**gekennzeichnet durch**
dass der zweite Abschnitt (105) eine zweite radiale Breite (116) aufweist;
wobei die erste radiale Breite (114) kleiner ist als die zweite radiale Breite (116), und wobei der zweite Abschnitt (105) dimensioniert ist, um mindestens ein Paar (6) von Schenkeln aufzunehmen, ohne sich zu bewegen, wenn der Finger (111) radial bewegt wird, wobei
ein Trennsteg (118) zwischen dem ersten und dem zweiten Abschnitt (112, 115) angeordnet ist, wobei der mindestens eine Finger (111) einen Sitz (112) zur axialen Aufnahme der Schenkelenden von Haarnadelleitern aufweist, wobei der Sitz (112) eine erste Kammer (113), die den ersten Abschnitt bereitstellt und eine erste radiale Kammerbreite (114) aufweist, die dimensioniert ist, um mindestens ein Paar (6) von Schenkeln aufzunehmen, und eine zweite Kammer (115) umfasst, die den zweiten Abschnitt bereitstellt und eine zweite radiale Kammerbreite (116) aufweist, wobei die erste radiale Kammerbreite (114) kleiner ist als die zweite radiale Kammerbreite (116).

2. Die Vorrichtung nach Anspruch 1, wobei der mindestens eine Finger (111) ausgelegt ist, um die, vorzugsweise mindestens die radial äussersten, Enden des Paares (6) von Schenkeln über einen radialen Bewegungsabstand (117) radial zu bewegen, und wobei eine radiale Länge (103) des Arms (101) grösser ist als die Summe des radialen Bewegungsabstands (117) und mindestens des Zweifachen der radialen Erstreckung (110) der Paare (6, 6') von Schenkelenden.

3. Die Vorrichtung nach einem der vorhergehenden Ansprüche, wobei die erste Kammer (113) eine radial innere Kammer (113) ist und die zweite Kammer (115) eine radial äussere Kammer (115) ist.

4. Die Vorrichtung nach Anspruch 3, wobei die erste Kammer (115) dimensioniert ist, um genau ein Paar (6) von Enden aufzunehmen.

5. Die Vorrichtung nach einem der vorhergehenden Ansprüche 3 oder 4, wobei die zweite Kammer (115) dimensioniert ist, um mindestens zwei Paare (6, 6') von Enden aufzunehmen.

6. Die Vorrichtung nach einem der vorhergehenden Ansprüche, wobei die Maschine eine Vielzahl von kreisförmig angeordneten Fingern (111) umfasst und wobei die Finger (111) unabhängig beweglich sind.

7. Ein Verfahren zum Aufweiten von Enden (5a, 5b) von Schenkeln von Haarnadelleitern, die in Nuten eines Statorkerns angeordnet sind, wobei das Verfahren die Schritte umfasst:
Positionieren eines Trennelements (102), das mit einem, vorzugsweise radial inneren, Ende eines sich radial erstreckenden Arms (101) verbunden ist, zwischen zwei Enden von radial benachbarten Paaren (6, 6') von Schenkeln von Haarnadelleitern;
Radiales Bewegen mindestens eines ersten Paares (6) von Schenkeln von Haarnadelleitern durch radiales Bewegen des Trennelements (102);
Aussereingriffbringen des mindestens einen ersten Paares (6) von Schenkelenden mit dem Trennelement (102),
Radiales Bewegen des Trennelements (102) in eine radiale Position, die der radialen Position von mindestens einem zweiten Paar (6') von Schenkeln entspricht, während das mindestens eine erste Paar (6) von Schenkeln stationär gehalten wird,
und vorzugsweise radiales Bewegen des zweiten Paares (6') von Schenkeln durch radiales Bewegen des Trennelements (102), während das mindestens eine erste Paar (6) von Schenkeln stationär gehalten wird,
wobei das Verfahren **dadurch gekennzeichnet ist, dass** das Verfahren die weiteren Schritte umfasst:
Einsetzen mindestens eines ersten Paares (6) von Schenkelenden in eine erste, vorzugsweise radial innere, Kammer (113) eines Sitzes (112) eines Fingers (111), wobei die erste radiale Kammer (113) eine erste radiale Kammerbreite (114) aufweist;
Radiales Bewegen des mindestens einen ersten Paares (6) von Schenkeln durch radiales Bewegen des Fingers (111);
Aussereingriffbringen des mindestens einen ersten Paares (6) von Schenkelenden mit der ersten Kammer (113);
Radiales Bewegen des Fingers (111) in eine radiale Position, die der radialen Position von mindestens einem zweiten Paar (6') von Schenkelenden entspricht,
Einsetzen des mindestens einen zweiten Paares (6') von Schenkelenden in die erste Kammer (113) und Einsetzen des mindestens einen ersten Paares (6) von Schenkelenden in eine, vorzugsweise radial äussere, zweite Kammer (115), die eine zweite radiale Kammerbreite (116) aufweist, die grösser ist als die erste radiale Breite (114),
Radiales Bewegen des zweiten Paares (6') von Schenkelenden durch radiales Bewegen des Fingers (111), während das mindestens eine erste Paar (6) von Schenkelenden stationär gehalten wird.

8. System zur Vorbereitung von Schenkelenden von Haarnadelleitern in einem Statorkern zum Schweissen, umfassend eine Vorrichtung zum Aufweiten nach einem der Ansprüche 1-6 und eine Vorrichtung zum Verdrillen.

9. Verfahren zur Vorbereitung von Schenkelenden von Haarnadelleitern in einem Statorkern zum Schweissen, umfassend Schritte eines Verfahrens nach Anspruch 7 und Schritte eines Verfahrens zum Verdrillen.

## Revendications

1. Dispositif (100) pour l'évasement d'extrémités (5a, 5b) de branches de conducteurs en épingle à cheveux agencées dans des encoches d'un noyau de stator, ledit dispositif comprenant au moins un doigt (111), de préférence une pluralité de doigts (111), pour déplacer radialement les extrémités de branches de conducteurs en épingle à cheveux, dans lequel
ledit au moins un doigt (111) est agencé de manière mobile dans une direction radiale vers l'intérieur et dans une direction radiale vers l'extérieur,
ledit au moins un doigt (111) est agencé de manière mobile dans une direction axiale vers le haut et dans une direction axiale vers le bas ;
ledit au moins un doigt (111) comprend au moins un bras s'étendant radialement (101) et un élément de séparation (102) agencé de manière adjacente à une extrémité, de préférence radialement intérieure, du bras (101) ;
ledit élément de séparation (102) est conçu pour être positionné entre deux extrémités (5a, 5b) de branches radialement voisines de paires (6, 6') de conducteurs en épingle à cheveux ;
ledit doigt (111) a une première section (104), de préférence radialement intérieure, adjacente à l'élément de séparation (102),
ladite première section (104) ayant une première largeur radiale (114) dimensionnée pour recevoir au moins une paire (6) d'extrémités de branches et est adaptée pour déplacer ladite paire (6) d'extrémités de branches lorsque le doigt (111) est déplacé radialement ;
et ledit doigt (111) a une seconde section (105), de préférence radialement extérieure, qui ne chevauche pas la première section (104),
**caractérisé par**
**le fait que** ladite seconde section (105) a une seconde largeur radiale (116) ;
dans lequel ladite première largeur radiale (114) est inférieure à la seconde largeur radiale (116), et dans lequel ladite seconde section (105) est dimensionnée pour recevoir au moins une paire (6) de branches sans déplacement, lorsque le doigt (111) est déplacé radialement, dans lequel
une nervure de séparation (118) est agencée entre la première et la seconde section (112, 115), dans lequel ledit au moins un doigt (111) a un siège (112) pour recevoir axialement les extrémités de branches de conducteurs en épingle à cheveux, ledit siège (112) comprend un premier compartiment (113) fournissant la première section et ayant une première largeur de compartiment radiale (114) dimensionnée pour recevoir au moins une paire (6) de branches, et un second compartiment (115) fournissant la seconde section et ayant une seconde largeur de compartiment radiale (116), dans lequel ladite première largeur de compartiment radiale (114) est inférieure à la seconde largeur de compartiment radiale (116).

2. Le dispositif selon la revendication 1, dans lequel l'au moins un doigt (111) est adapté pour déplacer radialement les extrémités, de préférence au moins les plus radialement extérieures, de la paire (6) de branches sur une distance de déplacement radial (117) et dans lequel une longueur radiale (103) du bras (101) est supérieure à la somme de ladite distance de déplacement radial (117) et d'au moins deux fois l'étendue radiale (110) des paires (6, 6') d'extrémités de branches.

3. Le dispositif selon l'une des revendications précédentes, dans lequel le premier compartiment (113) est un compartiment radialement intérieur (113), et le second compartiment (115) est un compartiment radialement extérieur (115).

4. Le dispositif selon la revendication 3, dans lequel le premier compartiment (115) est dimensionné pour recevoir exactement une paire (6) d'extrémités.

5. Le dispositif selon l'une des revendications précédentes 3 ou 4, dans lequel le second compartiment (115) est dimensionné pour recevoir au moins deux paires (6, 6') d'extrémités.

6. Le dispositif selon l'une des revendications précédentes, dans lequel la machine comprend une pluralité de doigts (111) agencés de manière circulaire et dans lequel les doigts (111) sont mobiles indépendamment.

7. Procédé pour l'évasement d'extrémités (5a, 5b) de branches de conducteurs en épingle à cheveux agencées dans des encoches d'un noyau de stator, ledit procédé comprenant les étapes consistant à :
positionner un élément de séparation (102) étant relié à une extrémité, de préférence radialement intérieure, d'un bras s'étendant radialement (101) entre deux extrémités de paires radialement voisines (6, 6') de branches de conducteurs en épingle à cheveux ;
déplacer radialement au moins une première paire (6) de branches de conducteurs en épingle à cheveux en déplaçant radialement ledit élément de séparation (102) ;
désengager ladite au moins une première paire (6) d'extrémités de branches dudit élément de séparation (102), déplacer radialement l'élément de séparation (102) vers une position radiale correspondant à la position radiale d'au moins une seconde paire (6') de branches, tout en maintenant immobile ladite au moins une première paire (6) de branches,
et de préférence déplacer radialement ladite seconde paire (6') de branches en déplaçant radialement ledit élément de séparation (102), tout en maintenant immobile ladite au moins une première paire (6) de branches,
le procédé étant **caractérisé en ce que** le procédé comprend les étapes supplémentaires consistant à :
insérer au moins une première paire (6) d'extrémités de branches, dans un premier compartiment (113), de préférence radialement intérieur, d'un siège (112) d'un doigt (111), ledit premier compartiment radial (113) ayant une première largeur de compartiment radiale (114) ;
déplacer radialement ladite au moins une première paire (6) de branches en déplaçant radialement ledit doigt (111) ;
désengager ladite au moins une première paire (6) d'extrémités de branches dudit premier compartiment (113) ;
déplacer radialement le doigt (111) vers une position radiale correspondant à la position radiale d'au moins une seconde paire (6') d'extrémités de branches,
insérer ladite au moins une seconde paire (6') d'extrémités de branches dans le premier compartiment (113) et insérer ladite au moins une première paire (6) d'extrémités de branches dans un second compartiment (115), de préférence radialement extérieur, ayant une seconde largeur de compartiment radiale (116) supérieure à la première largeur radiale (114),
déplacer radialement ladite seconde paire (6') d'extrémités de branches en déplaçant radialement ledit doigt (111), tout en maintenant immobile ladite au moins une première paire (6) d'extrémités de branches.

8. Système pour la préparation d'extrémités de branches de conducteurs en épingle à cheveux dans un noyau de stator en vue d'un soudage, comprenant un dispositif d'évasement selon l'une des revendications 1 à 6 et un dispositif de torsion.

9. Procédé pour la préparation d'extrémités de branches de conducteurs en épingle à cheveux dans un noyau de stator en vue d'un soudage, comprenant des étapes d'un procédé selon la revendication 7 et des étapes d'un procédé de torsion.
